# EUROPEAN PATENT APPLICATION

(11) **EP 4 699 832 A1**
(43) Date of publication of application: **25.02.2026**
(21) Application number: 24196089.7
(22) Date of filing: 23.08.2024
(51) Int. Cl.: B60H 1/00, B60H 1/26

(54) **VEHICLE COMPRISING A VENTILATION APPARATUS**

(71) Applicant: Traton AB, 151 87 Södertälje (SE)
(72) Inventor: VENUGOPAL, Deepu, 15160 Södertälje (SE); WAHLQVIST, Jörgen, 61933 Trosa (SE); ÅSELL, Fredrik, 15395 Järna (SE); MGHARI, Israe, 15148 Södertälje (SE)
(74) Representative: Scania CV AB

(57) **Abstract**

Vehicle comprising an occupant compartment (3), a ventilation apparatus (1) configured to deliver air into the occupant compartment (3), a front body panel (4) facing in a forward moving direction (fd) of the vehicle, one or more first air inlets (i1) each arranged to conduct air into the ventilation apparatus (1) from a location (L1) in front of the front body panel (4), one or more second air inlets (i2) each arranged to conduct air into the ventilation apparatus (1) from a location (L2) behind the front body panel (4), and a valve assembly (5) controllable between a first state, in which the ventilation apparatus (1) delivers air into the occupant compartment (3) from the one or more first air inlets (i1), and a second state, in which the ventilation apparatus (1) delivers air into the occupant compartment (3) from the one or more second air inlets (i2).

## Description

### TECHNICAL FIELD

The present disclosure relates to a vehicle comprising an occupant compartment and a ventilation apparatus, wherein the ventilation apparatus is configured to deliver air into the occupant compartment.

### BACKGROUND

The occupant compartment of a vehicle refers to the enclosed space within a vehicle where passengers and the driver are situated. This compartment is designed to provide comfort, safety, and accessibility to vehicle controls and amenities. Features of the occupant compartment typically include seating arrangements, dashboard and control interfaces, and various safety mechanisms like airbags and seat belts. It is an area engineered for ergonomic efficiency, noise reduction, and thermal comfort to ensure a pleasant experience for occupants during travel.

A ventilation apparatus in a vehicle manages the intake and circulation of air within the occupant compartment. This apparatus ensures that fresh air is supplied while stale air is expelled, maintaining a healthy and comfortable environment inside the occupant compartment. The ventilation apparatus usually comprises a heating element to heat the air when necessary and may also comprise a cooling radiator for providing cooled air to the occupant compartment. Air is typically drawn into the ventilation apparatus through air inlets located at the front of the vehicle near the grille or at a base of the windshield.

Heating and cooling the occupant compartment is not solely for comfort but also for safety reasons. For example, heating the air conducted into the occupant compartment is crucial for defrosting and defogging the windshield, ensuring clear visibility for the driver. Without proper defrosting and defogging, the windshield can become opaque due to frost or condensation, significantly impairing the driver's ability to see the road and other road users. Furthermore, insufficient heating or cooling of the occupant compartment can lead to the driver becoming fatigued, drowsy, and losing concentration while driving.

Heating or cooling the air within the occupant compartment requires energy input, often sourced from the vehicle's engine or electrical system. High energy consumption for these processes is a problem, as it can lead to reduced energy efficiency of the vehicle and increased environmental impact. Reducing the energy required for heating or cooling air is beneficial because it conserves fuel or battery life, extending the operational range of the vehicle, especially in electric vehicles. Additionally, efficient energy use in the ventilation system helps reduce operational costs and can support the overall energy management strategy of the vehicle.

Another related problem is the need for rapid heating or cooling of the air within the occupant compartment. Quick adjustment of the temperature is important for passenger comfort, particularly during extreme weather conditions. Moreover, a quick temperature adjustment inside the occupant compartment can prevent fatigue and ensure the driver remains alert and attentive, thereby enhancing overall safety on the road. Furthermore, a slow heating of the air conducted into the occupant compartment can hinder defogging and defrosting capabilities, compromising visibility and safety.

Normally, achieving rapid heating or cooling requires large-sized components and significant power input. The disadvantages of this approach include increased weight, size, and complexity of the ventilation apparatus and the related heating and cooling systems. Moreover, a high power input for heating or cooling the air can reduce the overall energy efficiency of the vehicle, leading to increased operational costs and a larger environmental footprint.

Water entry into the ventilation apparatus poses additional problems. Water ingress can lead to corrosion, mould growth, and electrical failures within the ventilation system. Moreover, air inlets can become clogged by snow, obstructing airflow and reducing the efficiency of the ventilation apparatus.

### SUMMARY

It is an object of the present invention to overcome, or at least alleviate, at least some of the above-mentioned problems and drawbacks. The object is achieved by the subject-matter of the appended independent claim(s).

According to an aspect of the present disclosure, the object is achieved by a vehicle comprising an occupant compartment, a ventilation apparatus configured to deliver air into the occupant compartment, a front body panel facing in a forward moving direction of the vehicle, and one or more first air inlets each arranged to conduct air into the ventilation apparatus from a location in front of the front body panel with respect to the forward moving direction. The vehicle further comprises one or more second air inlets each arranged to conduct air into the ventilation apparatus from a location behind the front body panel with respect to the forward moving direction and a valve assembly controllable between a first state, in which the ventilation apparatus delivers air into the occupant compartment from the one or more first air inlets, and a second state, in which the ventilation apparatus delivers air into the occupant compartment from the one or more second air inlets.

Thereby, a vehicle is provided having conditions for a decreased energy consumption for heating and cooling the occupant compartment. This is because the one or more first air inlets is/are arranged to conduct air into the ventilation apparatus from a location in front of the front body panel with respect to the forward moving direction whereas the one or more second air inlets is/are arranged to conduct air into the ventilation apparatus from a location behind the front body panel with respect to the forward moving direction. The air taken from the location behind the front body panel can be expected to have a higher temperature than air taken from the location in front of the front body panel during operation of the vehicle due to the transfer of heat from various surfaces, systems, and components of the vehicle to the air at the location behind the front body panel.

Therefore, if the current ambient temperature is below the desired temperature of the occupant compartment, the valve assembly can be controlled to the second state to lower the heating need of the air before it is conducted into the occupant compartment, thereby also lowering the energy consumption required for heating the occupant compartment.

Likewise, if the current ambient temperature is above the desired temperature of the occupant compartment, the valve assembly can be controlled to the first state to lower the cooling need of the air before it is conducted into the occupant compartment, thereby also lowering the energy consumption required for cooling the occupant compartment.

Lowering the energy consumption required for heating and cooling the occupant compartment of a vehicle offers several advantages. For combustion engine vehicles, it can improve fuel efficiency, leading to cost savings and a smaller environmental footprint. In electric vehicles, it can extend battery life and driving range, reducing the need for frequent recharging. Furthermore, a lowered energy consumption required for heating and cooling the occupant compartment can enhance vehicle performance by allowing more energy to be directed to primary functions, and increase system longevity by reducing strain on heating and cooling components.

Moreover, this improved energy management can reduce the time needed for heating and cooling the occupant compartment without requiring increased weight, size, and complexity of the ventilation apparatus and the related heating and cooling systems. An ability to quickly heating and cooling of the occupant compartment lead to several advantages. For example, a rapid defrosting and defogging of the windshield enhance driver visibility and safety, particularly in cold or humid conditions. Moreover, quick heating and cooling also ensures greater passenger comfort and driver alertness, directly impacting safety.

Accordingly, a vehicle is provided overcoming, or at least alleviating, at least some of the above-mentioned problems and drawbacks. As a result, the above-mentioned object is achieved.

Optionally, the vehicle comprises a front utility compartment at the location behind the front body panel with respect to the forward moving direction. In other words, in these embodiments, the one or more second air inlets is/are arranged to conduct air into the ventilation apparatus from the front utility compartment, which obviously can be expected to contain hotter air than at the location in front of the front body panel during operation of the vehicle due to the transfer of heat from various surfaces of the front utility compartment to the air therein. As a further result, a vehicle is provided with improved conditions for decreased energy consumption in heating the occupant compartment, along with an enhanced capability to quickly heat the occupant compartment without adding weight, size, and complexity to the ventilation apparatus and the related heating and cooling systems.

Optionally, the front utility compartment accommodates one or more radiators. Thereby, the front utility compartment can be expected to contain significantly hotter air compared to the area in front of the front body panel during the operation of the vehicle due to the transfer of heat from the one or more radiators to the air inside the front utility compartment. As a result, a vehicle is provided with further improved conditions for decreased energy consumption in heating the occupant compartment, along with a further enhanced capability to quickly heat the occupant compartment without adding weight, size, and complexity to the ventilation apparatus and the related heating and cooling systems.

Optionally, the front utility compartment accommodates at least part of an engine configured to provide motive power to the vehicle. Thereby, the front utility compartment can be expected to contain significantly hotter air compared to the area in front of the front body panel during the operation of the vehicle due to the transfer of heat from the at least part of the engine to the air inside the front utility compartment. As a result, a vehicle is provided with further improved conditions for decreased energy consumption in heating the occupant compartment, along with a further enhanced capability to quickly heat the occupant compartment without adding weight, size, and complexity to the ventilation apparatus and the related heating and cooling systems.

Optionally, the vehicle comprises a control arrangement configured to control the valve assembly between the first and second states based on weather data. Thereby, a vehicle is provided having conditions for an automatic control of the valve assembly based on weather data so as to efficiently reducing the energy consumption for heating and cooling the occupant compartment, and reducing the time needed for heating and cooling the occupant compartment without adding weight, size, and complexity to the ventilation apparatus and the related heating and cooling systems.

Optionally, the control arrangement is further configured to control the valve assembly between the first and second states based on a desired temperature of the occupant compartment. Thereby, a vehicle is provided having conditions for an automatic control of the valve assembly based on weather data and the desired temperature of the occupant compartment so as to reduce the energy consumption for heating and cooling the occupant compartment, and reducing the time needed for heating and cooling the occupant compartment.

Optionally, the weather data comprises an ambient temperature estimate. Thereby, an efficient control of the valve assembly performed by the control arrangement can be ensured so as to reduce the energy consumption for heating and cooling the occupant compartment, and reducing the time needed for heating and cooling the occupant compartment.

Optionally, the control arrangement is configured to control the valve assembly to the first state if the ambient temperature estimate exceeds a desired temperature of the occupant compartment and is configured to control the valve assembly to the second state if the desired temperature of the occupant compartment exceeds the ambient temperature estimate. Thereby, an efficient control of the valve assembly performed by the control arrangement can be ensured so as to reduce the energy consumption for heating and cooling the occupant compartment, and reducing the time needed for heating and cooling the occupant compartment.

Optionally, the weather data comprises a precipitation estimate. Thereby, conditions are provided for performing a control of the valve assembly minimizing the risk of entry of water into the ventilation apparatus and/or minimizing the risk of insufficient airflow into the ventilation apparatus caused by snow clogging the one or more first air inlets. Accordingly, this can result in enhanced durability of the ventilation system, reduced maintenance requirements, and consistent performance in various weather conditions. Additionally, it can improve passenger comfort and safety by maintaining optimal air quality and temperature control within the occupant compartment.

Optionally, the control arrangement is configured to control the valve assembly to the second state when the precipitation estimate indicates the presence of precipitation, such as rain or snow, at the location of the vehicle. Thereby, it can be ensured that the risk of entry of water into the ventilation apparatus is minimized and/or that the risk of insufficient airflow into the ventilation apparatus in case of snowfall is minimized.

Optionally, the vehicle is a heavy road vehicle, such as a truck or a bus. Thereby, a heavy road vehicle is provided having at least some of the above mentioned advantages.

Further features of, and advantages with, the present invention will become apparent when studying the appended claims and the following detailed description.

### BRIEF DESCRIPTION OF THE DRAWINGS

Various aspects of the present disclosure, including its particular features and advantages, will be readily understood from the example embodiments discussed in the following detailed description and the accompanying drawings, in which:
Fig. 1 schematically illustrates a side view of a vehicle according to some embodiments,
Fig. 2 illustrates the vehicle illustrated in Fig. 1 in which a front body panel has been pivoted to an open position,
Fig. 3 illustrates a front view of the vehicle illustrated in Fig. 1 and Fig. 2,
Fig. 4 schematically illustrates a cross section through a portion of the vehicle illustrated in Fig. 1 - Fig. 3, and
Fig. 5 illustrates the cross section of Fig. 4 in which a valve assembly has been controlled to a second state.

### DETAILED DESCRIPTION

Aspects of the present disclosure will now be described more fully. Like reference signs refer to like elements throughout. Well-known functions or constructions will not necessarily be described in detail for brevity and/or clarity.

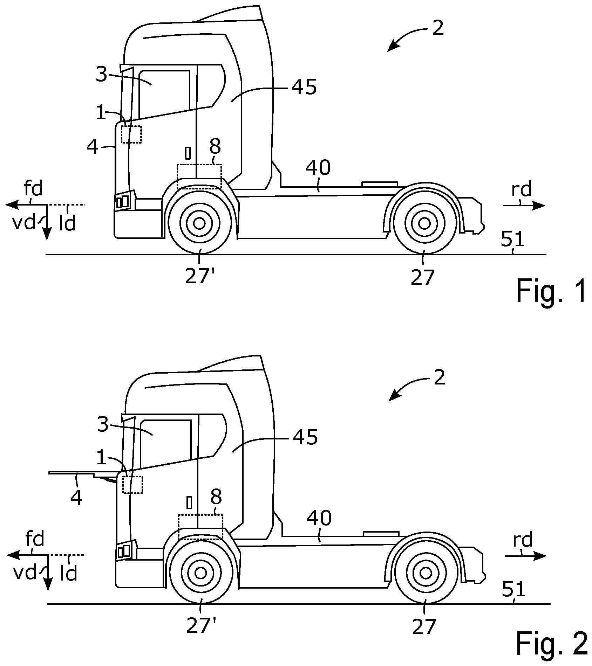

**Fig.** 1 schematically illustrates a side view of a vehicle 2 according to some embodiments. According to the illustrated embodiments, the vehicle 2 is a truck, i.e., a type of heavy wheeled vehicle, as well as a type of heavy commercial vehicle. According to further embodiments, the vehicle 2, as referred to herein, may be another type of heavy or lighter type of manned or unmanned vehicle for land-based propulsion such as a lorry, a bus, a construction vehicle, a tractor, a dumper, a forestry machinery, a military vehicle, a car, or the like.

The vehicle 2 comprises an engine 8 configured to provide motive power to the vehicle 2. According to the illustrated embodiments, the engine 8 is an internal combustion engine. The engine 8 may be a diesel engine, i.e. a type of compression ignition engine. The engine 8 may thus be configured to operate on diesel or a diesel-like fuel, such as biodiesel, biomass to liquid (BTL), or gas to liquid (GTL) diesel. Diesel-like fuels, such as biodiesel, can be obtained from renewable sources such as vegetable oil which mainly comprises fatty acid methyl esters (FAME). Diesel-like fuels can be produced from many types of oils, such as rapeseed oil (rapeseed methyl ester, RME) and soybean oil (soy methyl ester, SME).

According to further embodiments, the engine 8 of the vehicle 2 may be an Otto engine with a spark-ignition device, wherein the Otto engine is configured to run on petrol, alcohol, a gaseous fuel, or combinations thereof. Alcohol, such as ethanol, can be derived from renewable biomass. The gaseous fuel may also be referred to as fuel gas and may encompass any type of fuel that under ordinary ambient temperature and pressure conditions are gaseous and which can be stored at pressure in a pressure tank and can be combusted in an internal combustion engine to produce useful work. Examples of such gaseous fuels are compressed natural gas (CNG), liquified natural gas (LNG), Liquefied Petroleum Gas (LPG), Hydrogen (H2), Biogas, and Syngas.

Many gaseous fuels can be derived from renewable sources, such as from renewable biomass. According to some embodiments, the engine 8 may be a dual fuel engine configured to operate using two different fuels, such as a gaseous fuel and a liquid fuel. According to embodiments herein, the engine 8 may be a four-stroke internal combustion engine.

According to the illustrated embodiments, the vehicle 2 comprises the engine 8 as the only means of providing motive power to the vehicle 2. However, according to further embodiments, the vehicle 2 may be a so called hybrid electric vehicle comprising one or more electric propulsion machines, in addition to the engine 8, for providing motive power to the vehicle 2. Moreover, according to some embodiments, the vehicle 2 may comprise an electric propulsion system as the only means for providing motive power to the vehicle 2 and no internal combustion engine. In such embodiments, the vehicle 2 may be referred to as a pure electric vehicle 2. In embodiments in which the vehicle 2 comprises an at least partially electric powertrain, the vehicle 2 may comprise a propulsion battery configured to provide electricity to one or more electric propulsion machines of the at least partially electric powertrain.

According to the illustrated embodiments, the vehicle 2 is a wheeled vehicle comprising a number of wheels 27, 27'. According to the embodiments illustrated in Fig. 1, the vehicle 2 comprises two driven wheels 27 which constitute rear-wheels of the vehicle 2. The vehicle 2 further comprises two non-driven wheels 27', which according to the illustrated embodiments constitute front-wheels of the vehicle 2. In other words, in these embodiments, the engine 8 is configured to provide motive power to the vehicle 2 via the driven wheels 27 of the vehicle 2. However, according to further embodiments, the vehicle 2 may comprise another configuration of driven and non-driven wheels.

In Fig. 1, the vehicle 2 is illustrated as positioned in an intended use position on a flat surface 51 supporting the vehicle 2. As seen in Fig. 1, the number of wheels 27, 27' of the vehicle 2 is configured to abut against the flat surface 51 when the vehicle 2 is positioned in the intended use position thereon. Moreover, in Fig. 1, a forward moving direction fd and a reverse moving direction rd of the vehicle 2 are indicated. The reverse moving direction rd of the vehicle 2 is opposite to the forward moving direction fd of the vehicle 2. Furthermore, in Fig. 1, a longitudinal direction Id of the vehicle 2 is indicated. The longitudinal direction Id of the vehicle 2 is parallel to each of the forward moving direction fd and the reverse moving direction rd of the vehicle 2. Moreover, the longitudinal direction Id of the vehicle 2 is parallel to a flat surface 51 when the vehicle 2 is positioned in the intended use position thereon.

Furthermore, a vertical direction vd of the vehicle 2 is indicated in Fig. 1. The vertical direction vd of the vehicle 2 is perpendicular to the longitudinal direction Id of the vehicle 2. Moreover, the vertical direction vd of the vehicle 2 coincides with a local gravity vector when the flat surface 51 supporting the vehicle 2 is a horizontal surface.

The number of wheels 27, 27' of the vehicle 2 is supported relative to the chassis 40 via wheel axles. According to some embodiments, the vehicle 2 may comprise a wheel suspension system resiliently suspending the wheels 27, 27' of the vehicle 2 relative to the chassis 40. The chassis 40 of the vehicle 2 serves as a structural framework that supports other components and systems of the vehicle 2, such as the engine 8 and a cab 45 of the vehicle 2.

That is, as is seen in Fig. 1, according to the illustrated embodiments, the vehicle 2 comprises a cab 45. According to the illustrated embodiments, the cab 45 is resiliently suspended relative to the chassis 40. The cab 45 accommodates an occupant compartment 3. The occupant compartment 3 is arranged to accommodate one or more vehicle occupants, such as a driver and possibly one or more passengers. According to the illustrated embodiments, the occupant compartment 3 also comprises a driver environment of the vehicle 2. The term "driver environment" refers to the area within the vehicle 2 where a driver operates and controls the vehicle 2. The driver environment typically includes the driver's seat, steering wheel, pedals, dashboard, and other control interfaces and displays that the driver may use to manage the functions of the vehicle 2.

The chassis 40 of the vehicle 2 may comprise two elongated frame beams. A direction of elongation of each of the two elongated frame beams may be substantially parallel to the longitudinal direction Id of the vehicle 2. In this context, the wording "substantially parallel to", as used herein, may encompass that the angle between the objects referred to is less than 10 degrees, or is less than 7 degrees. The two elongated frame beams may be attached to each other via a number of cross members. These cross members may provide additional structural support and rigidity, ensuring that the frame beams maintain their alignment and can withstand the stresses encountered during vehicle operation. The chassis 40 may moreover comprise a number of subframes each arranged to support a structure, component, or system relative to at least one frame beam of the two elongated frame beams.

As schematically indicated in Fig. 1 the vehicle 2 comprises a ventilation apparatus 1. The ventilation apparatus 1 is configured to deliver air into the occupant compartment 3. The vehicle 2 further comprises a front body panel 4 facing in a forward moving direction fd of the vehicle 2. According to the illustrated embodiments, the front body panel 4 is hinged so that it can be pivoted between a closed position and an open position. In Fig. 1, the front body panel 4 is shown in the closed position.

Fig. 2 illustrates the vehicle 2 illustrated in Fig. 1 in which the front body panel 4 has been pivoted to the open position. According to the illustrated embodiments, the front body panel 4 can be pivoted to the open position to allow access to a front utility compartment of the vehicle 2. As understood from the above described, the front utility compartment is located behind the front body panel 4 with respect to the forward moving direction fd of the vehicle 2 when the front body panel 4 is in the closed position as illustrated in Fig. 1.

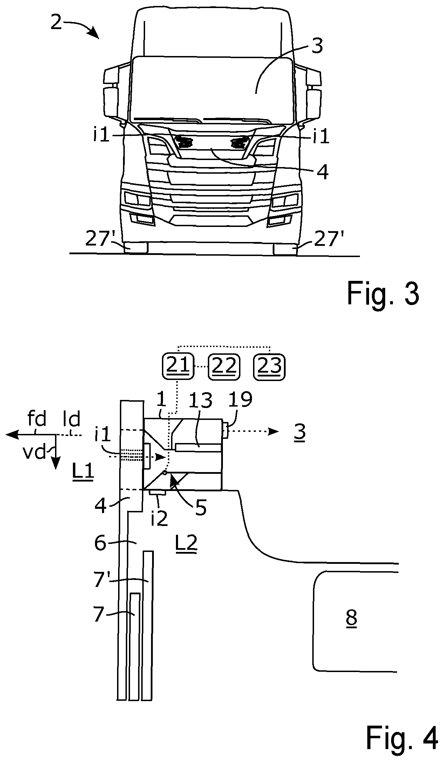

Fig. 3 illustrates a front view of the vehicle 2 illustrated in Fig. 1 and Fig. 2. In Fig. 3, the front body panel 4 is illustrated in the closed position. As can be seen in Fig. 3, according to the illustrated embodiments, the front body panel 4 is a large sized vehicle panel forming exterior surfaces of the vehicle 2. Below, simultaneous reference is made to Fig. 1 - Fig. 3, if not indicated otherwise. According to the illustrated embodiments, the front body panel 4 is designed to allow airflow through portions of it to cool a number of radiators arranged behind the front body panel 4 and provide ventilation of the front utility compartment. This part of the front body panel 4 may also be referred to as a front grille of the vehicle 2.

The front body panel 4 may be designed to reduce air resistance to improving fuel efficiency and overall performance. Additionally, it may be arranged to shield the engine 8 and other critical components from external elements such as dirt, debris, and weather conditions. Moreover, since it is hinged, the front body panel 8 allows easy access to the front utility compartment for maintenance and repairs. It also contributes to the truck's visual appeal, providing a sleek and cohesive look. Moreover, the front body panel 8 may include features like crumple zones to absorb impact energy in the event of a collision, enhancing overall vehicle safety. Since the front body panel 4 is hinged to be pivoted between the open and closed positions, the front body panel 4 may also be referred to as a hatch, a front hatch, a front utility compartment hatch, or similar, according to the illustrated embodiments.

Fig. 4 schematically illustrates a cross section through a portion of the vehicle 2 illustrated in Fig. 1 - Fig. 3. In Fig. 4, the cross section is made in a plane being parallel to the longitudinal direction Id of the vehicle 2 and parallel to the vertical direction vd of the vehicle 2. The portion of the vehicle 2 illustrated in Fig. 4 comprises the front body panel 4, the front utility compartment 6, the ventilation apparatus 1, a portion of the engine 8 of the vehicle 2, and a portion of the occupant compartment 3. In Fig. 4, the front body panel 4 is illustrated in the closed position. Below, simultaneous reference is made to Fig. 1 - Fig. 4, if not indicated otherwise.

The front body panel 4 faces in the forward moving direction fd of the vehicle 2 when the front body panel 4 is in the closed position. This means that a surface normal of the front body panel 4 at least substantially coincides with the forward moving direction fd of the vehicle 2 when the front body panel 4 is in the closed position. In this context, the term "at least substantially coincides with" may be interpreted as meaning that the angle between the surface normal of the front body panel 4 and the forward moving direction fd of the vehicle 2 is less than 20 degrees, or is less than 10 degrees, when the front body panel 4 is in the closed position.

The front body panel 4 is configured to be pivoted to the closed position before operation and travel of the vehicle 2. The vehicle 2 may comprise a safety system preventing take-off if the front body panel 4 is not fully closed, i.e., if the front body panel 4 is not fully pivoted to the closed position. As an alternative, or in addition, the safety system may be configured to output a notification in the driver environment of the vehicle 2 if the front body panel 4 is not fully pivoted to the closed position.

As indicated in Fig. 3 and Fig. 4, the vehicle 2 comprises one or more first air inlets i1. As is best seen in Fig. 3, according to the illustrated embodiments, the vehicle 2 comprises a plurality of first air inlets i1. However, for reasons of brevity and clarity, in the following, these are referred to as the one or more first air inlets i1. Each of the one or more first air inlets i1 is arranged to conduct air into the ventilation apparatus 1 from a location L1 in front of the front body panel 4 with respect to the forward moving direction fd. According to the illustrated embodiments, each of the one or more first air inlets i1 is provided as a through hole extending through the front body panel 4. In other words, according to the illustrated embodiments, the one or more first air inlets i1 is/are part of the front body panel 4.

As is seen in Fig. 4, the vehicle 2 further comprises one or more second air inlets i2. Each of the one or more second air inlets i2 is arranged to conduct air into the ventilation apparatus 1 from a location L2 behind the front body panel 4 with respect to the forward moving direction fd. According to the illustrated embodiments, the vehicle 2 comprises one second air inlet i2 arranged on the ventilation apparatus 1. However, according to further embodiments, the vehicle 2 may comprise another number of second air inlets i2. Moreover, the one or more second air inlets i2 may be arranged at another location of the vehicle 2 than on the ventilation apparatus 1.

The vehicle 2 further comprises a valve assembly 5 controllable between a first state, in which the ventilation apparatus 1 delivers air into the occupant compartment 3 from the one or more first air inlets i1, and a second state, in which the ventilation apparatus 1 delivers air into the occupant compartment 3 from the one or more second air inlets i2. In Fig. 4, the valve assembly 5 is illustrated in the first state in which the ventilation apparatus 1 delivers air into the occupant compartment 3 from the one or more first air inlets i1.

The ventilation apparatus 1 may comprise a fan configured to pump air from the one or more first air inlets i1 into the ventilation apparatus 1 and from the ventilation apparatus 1 into the occupant compartment 3 via an outlet 19 of the ventilation apparatus 1 when the valve assembly 5 is in the first state. Similarly, when the valve assembly 5 is in the second state, the fan will pump air from the one or more second air inlets i2 into the ventilation apparatus 1 and from the ventilation apparatus 1 to the occupant compartment 3 via the outlet 19 of the ventilation apparatus 1. The fan is not illustrated in Fig. 4 for reasons of brevity and clarity. The outlet 19 of the ventilation apparatus 1 may be configured to conduct air into the occupant compartment 3 via a ventilation system comprising a number of ducts and ventilation openings arranged at different locations inside the occupant compartment 3. Such a ventilation system is not depicted in Fig. 4 for reasons of brevity and clarity.

According to the embodiments illustrated in Fig. 4, the ventilation apparatus 1 comprises an air filter unit 13 configured to filtrate particles and matter from the air being pumped through the ventilation apparatus 1. Moreover, the ventilation apparatus 1, as referred to herein, may further comprise one or more heating elements and/or one or more cooling elements, such as one or more evaporators of a heat pump circuit, to control the temperature of the air being conducted through the ventilation apparatus 1 into the occupant compartment 3.

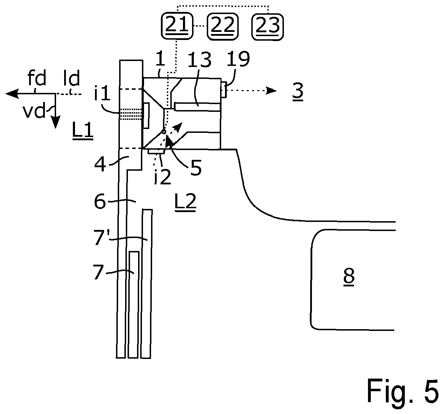

Fig. 5 schematically illustrates the cross section of Fig. 4 in which the valve assembly 5 has been controlled to the second state. Below, simultaneous reference is made to Fig. 1 - Fig. 5, if not indicated otherwise. As mentioned, the ventilation apparatus 1 delivers air into the occupant compartment 3 from the one or more second air inlets i2 when the valve assembly 5 is in the second state. Moreover, as explained above, each of the one or more second air inlets i2 is arranged to conduct air into the ventilation apparatus 1 from the location L2 behind the front body panel 4 with respect to the forward moving direction fd of the vehicle 2.

Due to these features, a vehicle 2 is provided having conditions for a decreased energy consumption for heating and cooling the occupant compartment 3. This is because the one or more first air inlets i1 is/are arranged to conduct air into the ventilation apparatus 1 from a location L1 in front of the front body panel 4 with respect to the forward moving direction fd whereas the one or more second air inlets i2 is/are arranged to conduct air into the ventilation apparatus 1 from a location L2 behind the front body panel 4 with respect to the forward moving direction fd. The air taken from the location L2 behind the front body panel 4 can be expected to have a higher temperature than air taken from the location L1 in front of the front body panel 4 during operation of the vehicle 2 due to the transfer of heat from various surfaces, systems, and components of the vehicle 2 to the air at the location L2 behind the front body panel 4.

As mentioned, according to the illustrated embodiments, the vehicle 2 comprises the front utility compartment 6 at the location L2 behind the front body panel 4 with respect to the forward moving direction fd. The front utility compartment 6 accommodates many surfaces, systems, and components which heat the air inside the front utility compartment 6. For example, as schematically depicted in Fig. 4, according to the illustrated embodiments, the front utility compartment 6 accommodates two radiators 7, 7'. Each of the two radiators 7, 7' is configured to cool a respective subsystem of the vehicle 2. According to further embodiments, the front utility compartment 6 may accommodate another number of radiators 7, 7' than two, such as one, three, four, or five. Purely as examples, each of the radiators 7, 7' being arranged in the front utility compartment 6 may be an engine coolant radiator, a charge air cooler, an oil cooler, an air conditioning condenser, a power steering fluid cooler, a fuel cooler, an Exhaust Gas Recirculation (EGR) cooler, and a hydraulic fluid cooler.

Moreover, as seen in Fig. 4, according to the illustrated embodiments, the front utility compartment 6 accommodates at least part of the engine 8 of the vehicle 2, which also at least partially heats the air in the front utility compartment 6 during operation. In embodiments in which the vehicle 2 comprises an at least partially electric powertrain, the front utility compartment 6 may accommodate one or more of an electric propulsion motor, power electronics, a radiator configured to cool parts of the electric powertrain, such as the electric propulsion motor and/or the power electronics, and a radiator configured to cool a propulsion battery of the vehicle 2.

Further examples of components and systems which can be arranged in the front utility compartment 6 that can heat air inside the front utility compartment 6 during operation of the vehicle 2 include a turbocharger, an exhaust manifold, a power steering pump, an air compressor, various belts and pulleys generating frictional heat, an alternator, a battery, and other types of electrical components, such as electronic control modules.

The front utility compartment 6, as referred to herein, may also be referred to as a front utility bay, a front service compartment, a front engine compartment, a front motor compartment, or the like. In this context, the wording 'front' means the area located at a forward part of the vehicle 2 as seen relative to the forward moving direction fd of the vehicle 2, typically positioned ahead of the occupant compartment 3 of the vehicle 2.

According to the illustrated embodiments, the valve assembly 5 is arranged inside the ventilation apparatus 1. In other words, according to the illustrated embodiments, the valve assembly 5 form part of the ventilation apparatus 1. However, according to further embodiments, the valve assembly 5, as referred to herein, may be separate from the ventilation apparatus 1. In more detail, as can be seen in Fig. 4 and Fig. 5, according to the illustrated embodiments, the ventilation apparatus 1 comprises a valve element and an actuator, wherein the actuator is configured to move the valve element between a first and a second position so as to transition the valve assembly 5 between the first and second states. That is, in Fig. 4, the valve element is positioned at the first position, in which the valve element blocks airflow from the one or more second air inlets i2 into the ventilation apparatus 1 and allows airflow into the ventilation apparatus 1 via the one or more first air inlets i1. In Fig. 5, the valve element is positioned at the second position, in which the valve element blocks airflow from the one or more first air inlets i1 into the ventilation apparatus 1 and allows airflow into the ventilation apparatus 1 via the one or more second air inlets i2. The valve element has not been provided with a reference sign in Fig. 4 and Fig. 5 for reasons of brevity and clarity. Likewise, the actuator has not been depicted in Fig. 4 and Fig. 5 for reasons of brevity and clarity. The actuator, as referred to herein, may for example comprise a solenoid.

According to the illustrated embodiments, the vehicle 2 comprises a control arrangement 21 configured to control the valve assembly 5 between the first and second states based on weather data. In these embodiments, the weather data comprises an ambient temperature estimate. The ambient temperature estimate is representative of a current ambient temperature at the location of the vehicle 2. The ambient temperature estimate may be obtained from one or more temperature sensors. The one or more temperature sensors can be installed on the exterior of the vehicle 2, positioned away from engine heat and direct sunlight, to measure the ambient air temperature directly. As an alternative, or in addition, the temperature estimate may be obtained using real-time weather data from local weather stations or online weather services integrated through a positioning system of the vehicle 2.

Moreover, according to the illustrated embodiments, the control arrangement 21 is configured to control the valve assembly 5 between the first and second states based on a desired temperature of the occupant compartment 3. In these embodiments, the control arrangement 21 is configured to control the valve assembly 5 to the first state if the ambient temperature estimate exceeds a desired temperature of the occupant compartment 3 and is configured to control the valve assembly 5 to the second state if the desired temperature of the occupant compartment 3 exceeds the ambient temperature estimate.

The desired temperature of the occupant compartment 3 may be obtained from a climate control system 22 of the vehicle 2, which may allow the driver or passengers to set a specific temperature. The climate control system 22 is schematically depicted in Fig. 4 and Fig. 5. According to some embodiments, temperature setting can also be influenced by preprogrammed preferences, such as those linked to individual driver profiles. Additionally, external inputs such as mobile applications or remote controls can be used to set the desired temperature of the occupant compartment 3 before entering the vehicle 2. The control arrangement 21 may also incorporate adaptive algorithms that adjust the desired temperature based on previous usage patterns and real-time environmental conditions.

Furthermore, according to the illustrated embodiments, the above-mentioned weather data comprises a precipitation estimate. That is, according to the illustrated embodiments, the control arrangement 21 is configured to control the valve assembly 5 between the first and second states based on the precipitation estimate. The precipitation estimate indicates the presence of precipitation, such as rain or snow, at the location of the vehicle 2. The precipitation estimate may be obtained from a rain sensor 23 arranged on the vehicle 2. The rain sensor 23 is schematically depicted in Fig. 4 and Fig. 5. A rain sensor 23 is typically mounted at the windshield and is normally configured to detect moisture on the windshield using infrared light or capacitive sensing technology. As an alternative, or in addition, the precipitation estimate may be obtained from external weather data sources, such as real-time updates from meteorological services or weather apps integrated through a positioning system of the vehicle 2.

In these embodiments, the control arrangement 21 is configured to control the valve assembly 5 to the second state when the precipitation estimate indicates the presence of precipitation, such as rain or snow, at the location of the vehicle 2. By controlling the valve assembly 5 to the second state when the precipitation estimate indicates the presence of rain, the risk of entry of water into the ventilation apparatus 1 can be minimized. Moreover, by controlling the valve assembly 5 to the second state when the precipitation estimate indicates the presence of snow, the risk of insufficient airflow into the ventilation apparatus 1, due to clogged first air inlets i1, can be minimized.

It is to be understood that the foregoing is illustrative of various example embodiments and that the invention is defined only by the appended independent claims. A person skilled in the art will realize that the example embodiments may be modified, and that different features of the example embodiments may be combined to create embodiments other than those described herein, without departing from the scope of the present invention, as defined by the appended independent claims.

As used herein, the term "comprising" or "comprises" is open-ended, and includes one or more stated features, elements, steps, components, or functions but does not preclude the presence or addition of one or more other features, elements, steps, components, functions, or groups thereof.

## Claims

1. A vehicle (2) comprising:
- an occupant compartment (3),
- a ventilation apparatus (1) configured to deliver air into the occupant compartment (3),
- a front body panel (4) facing in a forward moving direction (fd) of the vehicle (2),
- one or more first air inlets (i1) each arranged to conduct air into the ventilation apparatus (1) from a location (L1) in front of the front body panel (4) with respect to the forward moving direction (fd),
- one or more second air inlets (i2) each arranged to conduct air into the ventilation apparatus (1) from a location (L2) behind the front body panel (4) with respect to the forward moving direction (fd), and
- a valve assembly (5) controllable between a first state, in which the ventilation apparatus (1) delivers air into the occupant compartment (3) from the one or more first air inlets (i1), and a second state, in which the ventilation apparatus (1) delivers air into the occupant compartment (3) from the one or more second air inlets (i2).

2. The vehicle (2) according to claim 1, wherein the vehicle (2) comprises a front utility compartment (6) at the location (L2) behind the front body panel (4) with respect to the forward moving direction (fd).

3. The vehicle (2) according to claim 2, wherein the front utility compartment (6) accommodates one or more radiators (7, 7').

4. The vehicle (2) according to claim 2 or 3, wherein the front utility compartment (6) accommodates at least part of an engine (8) configured to provide motive power to the vehicle (2).

5. The vehicle (2) according to any one of the preceding claims, wherein the vehicle (2) comprises a control arrangement (21) configured to control the valve assembly (5) between the first and second states based on weather data.

6. The vehicle (2) according to any one of the preceding claims 5, wherein the control arrangement (21) is further configured to control the valve assembly (5) between the first and second states based on a desired temperature of the occupant compartment (3).

7. The vehicle (2) according to claim 5 or 6, wherein the weather data comprises an ambient temperature estimate.

8. The vehicle (2) according to claim 7, wherein the control arrangement (21) is configured to control the valve assembly (5) to the first state if the ambient temperature estimate exceeds a desired temperature of the occupant compartment (3) and is configured to control the valve assembly (5) to the second state if the desired temperature of the occupant compartment (3) exceeds the ambient temperature estimate.

9. The vehicle (2) according to any one of the claims 5 - 8, wherein the weather data comprises a precipitation estimate.

10. The vehicle (2) according to claim 9, wherein the control arrangement (21) is configured to control the valve assembly (5) to the second state when the precipitation estimate indicates the presence of precipitation, such as rain or snow, at the location of the vehicle (2).

11. The vehicle (2) according to any one of the preceding claims, wherein the vehicle (2) is a heavy road vehicle, such as a truck or a bus.
